# EUROPEAN PATENT APPLICATION

(11) **EP 3 798 259 A1**
(43) Date of publication of application: **31.03.2021**
(21) Application number: 19200022.2
(22) Date of filing: 27.09.2019
(51) Int. Cl.: C08L 27/12, C08L 27/18, H01B 3/44, C08L 79/08, C08L 81/02

(54) **CROSS-LINKABLE PFA-BASED FLUOROPOLYMER COMPOSITIONS**

(71) Applicant: Tyco Electronics UK Ltd, Wiltshire SN3 5HH (GB)
(72) Inventor: HINTON, Mary, Swindon, Wiltshire SN3 5HH (GB)
(74) Representative: Grünecker Patent- und Rechtsanwälte PartG mbB

(57) **Abstract**

A cross-linkable composition comprising a blend of a perfluoroalkoxy alkane with one or more selected from: a composition comprising melt-processable polytetrafluoroethylene (PTFE), a polyphenylene sulfide, an elastomeric fluoropolymer, and a polyetherimide; and one or more optional radiation crosslinking promoters. The composition enables manufacturing of articles which maintain favorable mechanical properties when continuously exposed to extreme temperatures. In addition, a cross-linked product obtained by subjecting said composition to ionizing radiation is disclosed, which may be used to manufacture reliable wire and cable products with high temperature ratings.

## Description

### FIELD OF INVENTION

The present invention relates to a blend of a perfluoroalkyl (PFA) and compatible melt-processable polymers which can be crosslinked to provide products with improved heat resistance and mechanical properties.

### BACKGROUND OF THE INVENTION

In the recent years, there has been a growing interest in the use and development of fluoropolymer-based resins with improved high-temperature performance, for example in wiring or cable equipment in industrial, military, automotive and/or aerospace applications.

For example, tetrafluoroethylene/perfluoro(alkyl vinyl ether) copolymers, commercially known as PFA are widely employed in high temperature applications since they have a melting point of approximately 305° C, are melt-fabricable, capable of withstanding operating temperatures up to 260°C and have favourable mechanical properties and resistance to chemicals (see US 2017/0154707 A1).

Nevertheless, is remains desirable to develop melt-processable fluoropolymer materials which allow continuous use at even higher operating temperatures (i.e. beyond 260° C, preferably beyond the melting point of PFAs).

It has been known to blend compatible fluoropolymers to improve the physical properties of the melt-processable fluoropolymer. For example, US 2002/111433 A1 discloses blending PFA with tetrafluoroethylene (TFE)/hexafluoropropylene (HFP) copolymer to enhance the melt processability, and an electric wire using the blend as coating. US 2003/0198769 A1 describes fluoropolymer compositions comprising a blend containing partially fluorinated thermoplastic and a perfluorothermoplastic (including PFA). However, the high-temperature stability of such fluoropolymer blends still leaves room for improvement. In order to advantageously combine the stability and chemical inertness of perfluorinated monomer units with enhanced elastomeric properties, US 7,476,711 B2 proposes melt blending of a perfluoroelastomer and a semi-crystalline copolymer with a particle size greater than 100 nm, adding a curative, and subsequently curing said composition to form a cured article. However, the mechanical properties of the thus obtained articles tend to deteriorate when exposed to high temperatures for prolonged periods of time.

In general, crosslinking of fluoroplastics via chemical or radiation crosslinking processes for developing higher temperature rated products such as moulded parts or tubings is extremely challenging, particularly since sufficient compatibility of the initial components must be ensured.

In this respect, US 5,409,997 A is specifically concerned with the provision of thermally stable fluoropolymer compositions and discloses a radiation-crosslinkable composition comprising a fluoropolymer of ethylene, tetrafluoroethylene and at least one monomer having at least one polyvalent atom in one or more side chains, as well as a coagent comprising a difunctional compound selected from the group consisting of an acrylate or salt of an acrylic acid and compounds wherein the difunctionality is provided by the presence of vinyl, epoxide, peroxide, or glycidal groups. However, the heat resistance of these fluoropolymer compositions, particularly at long-term exposure to temperatures above 240°C, still leaves room for improvement.

In view of the above, it remains desirable to provide fluoropolymer compositions which enable simple manufacturing of articles that maintain favorable mechanical properties even at continuous exposure to high temperatures (e.g. above 260° C, such as 300°C or even higher).

### SUMMARY OF THE INVENTION

The present invention solves this problem with the subject matter of the claims as defined herein. Further advantages of the present invention will be further explained in detail in the section below.

According to a first aspect of the present invention as specified in claims 1 to 11, a cross-linkable composition comprising a blend of (a) a perfluoroalkoxy alkane (PFA); (b) one or more selected from: (b1) a composition comprising melt-processable polytetrafluoroethylene (PTFE), (b2) a polyphenylene sulfide (PPS), (b3) an elastomeric fluoropolymer, and (b4) a polyetherimide (PEI); and (c) one or more optional radiation crosslinking promoters is provided. As has been found by the present inventors, said blend provides an improved combination of properties, with the components (a) and (b) being compatible to each other, and may be used for further processing to the final product by moulding or extrusion, for example, and subsequent cross-linking.

A second aspect of the present invention as specified in claims 12 and 13 relates to a cross-linked product obtained by subjecting the composition according to the first aspect to ionizing radiation, which results in products capable of withstanding extremely high operating temperatures.

In further aspects, the present invention relates to wire or cable products (according to claim 14) comprising the cross-linked product according to the second aspect.

In another aspect, the present invention as specified in claim 15 relates to a process manufacturing a cross-linked product, comprising the steps of: (i) mixing (a) a perfluoroalkoxy alkane (PFA); (b) one or more selected from: (b1) a composition comprising melt-processable polytetrafluoroethylene (PTFE), (b2) a polyphenylene sulfide (PPS), (b3) an elastomeric fluoropolymer, and (b4) a polyetherimide (PEI); and optionally (c) one or more radiation crosslinking promoters to prepare a crosslinkable composition; (ii) optionally subjecting the crosslinkable composition to a forming step; and (iii) subjecting the crosslinkable composition to ionizing radiation to obtain the cross-linked product..

Preferred embodiments of the cross-linkable composition according to the present invention and other aspects of the present invention are described in the following description and the claims.

### DETAILED DESCRIPTION OF THE INVENTION

For a more complete understanding of the present invention, reference is now made to the following description of the illustrative embodiments thereof:

### Cross-Linkable Fluoropolymer Composition

In a first embodiment, the present invention relates to a cross-linkable composition comprising a blend of (a) a perfluoroalkoxy alkane (PFA); (b) one or more selected from: (b1) a composition comprising melt-processable polytetrafluoroethylene (PTFE), (b2) a polyphenylene sulfide (PPS), (b3) an elastomeric fluoropolymer, and (b4) a polyetherimide (PEI); and optionally (c) one or more radiation crosslinking promoters.

It is noted that the terms "polymer" or "fluoropolymer", as used herein, generally refer to a polymeric material or fluorine-containing polymeric material having one or more monomer species, including homopolymers, co-polymers, terpolymers, and the like.

In a preferred embodiment, the composition is cross-linkable by ionizing radiation, as will be further explained below with respect to the second embodiment.

Component (a) is a semicrystalline, i.e. partially crystalline fluoroplastic, not a fluoroelastomer. In preferred embodiments, the PFA is a co-polymer comprising fluoroalkylene and a perfluoroether as main chain monomers. The fluoroalkylene is preferably a perfluoroalkylene, such as hexafluoropropylene (HFP) or tetrafluoroethylene (TFE), for example, of which tetrafluoroethylene (TFE) is particularly preferred. The perfluoroether is not particularly limited and may include perfluoroalkoxy alkanes, such as those derived from (per)fluoroalkylvinylethers (PAVE) CF₂-CFOR_{f}, wherein R_{f} is a perfluorinated group with 1 to 6 carbon atoms; or from perfluorooxyalkylvinylethers CF₂-CFOx, wherein X is a C₁-C₁₂-perfluorooxyalkyl having one or more ether groups. The comonomeric unit -CF₂-CF(OR_{f})-, wherein R_{f} is a perfluorinated group with 1 to 6 carbon atoms, is particularly preferred. Commercially available examples of suitable PFAs include Fluon® PFA resins available from AGC Chemicals Europe.

In embodiments, the PFA can be fluorine-treated so as to have the stable -CF₃ end groups. In further embodiments, the PFA may comprise acid anhydride functional groups as pendant groups that are grafted onto one or more of the aforementioned co-monomers (e.g. by replacing a fluorine substituent) or provided independently as pendant group of a co-monomer, i.e. through co-polymerization. Among compounds for grafting onto and thereby becoming part of the semi-crystalline thermoplastic, maleic acid and maleic anhydride (MAnh) may be mentioned. Maleic anhydride can be halogen-substituted, e.g., dichloromaleic anhydride and difluoromaleic anhydride. Grafting may be brought about by using a grafting compound comprising a linking group (including, but not limited to an unsaturated or saturated hydrocarbon group which is involved in addition or association of radicals (particularly an organic group having an α,β-unsaturated double bond at its terminal), an amino group or a phenol group which is involved in nucleophilic reaction, a peroxy group or an azo group. Preferred linking groups include a group having a carbon-carbon unsaturated bond. The amount of the grafting compound to be used for grafting is usually from 0.01 to 100 parts by weight, preferably from 0.1 to 20 parts by weight, per 100 parts by weight of the fluorine-containing polymer. In the case of a grafting compound of a polymer type, it may be used in a larger amount (up to about 50 parts by weight). Exemplary grafting methods and optional radical-forming agents used in the grafting process will be known to the skilled artisan and are disclosed in US 5,736,610 A, for example.

Component (b1), i.e. the melt-processable polytetrafluoroethylene (PTFE) polytetrafluoroethylene used in the present invention, may be distinguished by the skilled artisan from conventional, non-melt flowable PTFE. Melt processability may be brought about by adjusting (i.e. lowering) the molecular weight of the PTFE or by modification of the polymer chain (for example, through co-polymerization according to US 6 737 165 B1 or DE 10 2007 040095 A1). Preferred embodiments of component (b1) may also include a composition comprising melt-fabricable tetrafluoroethylene/perfluoro(alkyl vinyl ether) copolymer (e.g., where the perfluoroalkyl contains 1 to 5 carbon atoms) and melt-flowable polytetrafluoroethylene (PTFE), which may result in an epitaxially co-crystalline (ECC) perfluoropolymer upon thermal aging. As an example thereof, commercially available DuPont™ ECCtreme® ECA 3000 fluoroplastic resin may be mentioned.

Component (b2) is a polyphenylene sulfide (PPS), which may be unsubstituted or substituted. For example, the PPS may be modified to contain reactive end-groups, including, but not limited to -C₆H₄Cl and -C₆F₄S⁻Na⁺ (or -C₆H₄SH if the reaction mixture is acidified). The PPS used in the present invention typically has a high melting point (e.g., 265° C (melting onset)) and is a substantially linear polymer having a relatively high molecular weight. The PPS may be provided compounded with a filler material, such as glass fibers and/or mineral fibers. Commercially available examples of the latter include Ryton® BR111 by Solvay Specialty Polymers, for example.

In terms of improved mechanical properties, it may be preferred that the elastomeric fluoropolymer (b3) is not perfluorinated, but only partially fluorinated. More preferably, the elastomeric fluoropolymer is a copolymer comprising copolymerized units of a perfluorinated monomer and a non-fluorinated or partially fluorinated monomer, optionally with one or more additional types of monomers. The elastomeric fluoropolymer used in the present invention preferably contains between 20 to 80 wt.-%, based on the total weight of the elastomeric fluoropolymer, of copolymerized units of perfluorinated monomer and 5 to 80 wt.-% of non-fluorinated or partially fluorinated monomer. Further preferably, the perfluorinated monomer is a perfluoroalkylene, such as hexafluoropropylene (HFP) or tetrafluoroethylene (TFE), for example, of which tetrafluoroethylene (TFE) is particularly preferred. The non-fluorinated or partially fluorinated monomer is preferably selected from partially fluorinated hydrocarbon olefins (such as one or more of vinylidene fluoride, 1,2,3,3,3-pentafluoropropene (1-HPFP), 1,1,3,3,3-pentafluoropropene (2-HPFP), and vinyl fluoride) and non-fluorinated hydrocarbon olefins (such as ethylene, propylene or isobutylene, for example), the latter being further preferred. As non-fluorinated or partially fluorinated monomer, propylene is especially preferred. As elastomeric fluoropolymer, an alternating co-polymer of tetrafluoroethylene and propylene (TFE/P) is especially preferred. Commercially available examples thereof include, but are not limited to fluoroelastomers selected from the Aflas® 100/150 ranges available from AGC Chemicals Europe and the TBR range by DuPont Performance Elastomers.

Component (b4) is a polyetherimide homopolymer or a co-polymer comprising polyetherimide. In preferred embodiments, component (b4) is selected from a polysiloxane/polyetherimide block-copolymer or from compositions comprising a blend of a polyetherimide and a polysiloxane/polyetherimide block-copolymer. While not being limited thereto, examples thereof are disclosed in US 8,013,251 B2, US 8,013,076 B2, US 8,071,693 B2 and US 8,491,997 B2.

From the viewpoint of enhanced processability, it is generally preferred that the melting point of components (b1) to (b4) is in the range of from 260°C to 340°C, further preferably from 280°C to 330°C.

In embodiments, it may be preferable that the one or more polymers (b) comprise at least two of the polymers selected from: (b1) a modified polytetrafluoroethylene (PTFE), (b2) a polyphenylene sulfide (PPS), (b3) an elastomeric fluoropolymer, and (b4) a polyetherimide (PEI).

In order to achieve especially favourable heat resistance, it is preferred that the weight content ratio of perfluoroalkoxy alkane (PFA) (a) to the total of the one or more polymers (b) is selected so as to fall into the range of from 1:1 to 9:1, especially preferably in the range of from 2:1 to 8:1.

Based on the overall cross-linkable composition, it may be preferred that the content of PFA (a) is at least 50 wt.-%, preferably between 60 and 95 wt.-%, and further preferably between 65 and 80 wt.-%, based on the total weight of the composition. In addition or alternatively, the total content of the one or more polymers (b) is preferably less than 50 wt.-%, further preferably between 5 and 40 wt.-%, and especially preferably between 20 and 35 wt.-%, based on the total weight of the cross-linkable composition.

Advantageously, adjusting the type and quantity of components of the cross-linkable composition according to the first embodiment allows for a fine-tuning of toughness and flexibility of the blend, which is then ready for further processing (including moulding and/or extrusion, for example). Upon cross-linking, these properties are then stabilized to be maintained even at extreme temperatures.

As indicated above, the cross-linkable composition according to the present invention may comprise one or more radiation crosslinking promoters (c) or so-called prorads. In preferred embodiments, pro-rads are comprised in a total amount of up to 10 wt.-% based on the total weight of the cross-linkable composition, e.g. in a total amount of from 1 to 7 wt.-%. As examples of radiation crosslinking promoters, compounds having at least two ethylenic double bonds, present as allyl, methallyl, propargyl, acrylyl, or vinyl groups may be mentioned, such as triallyl cyanurate (TAC), triallyl isocyanurate (TAIC), triallyl trimellitate, triallyl trimesate, tetraallyl pyromellitate, diallyl isophthalate, diallyl terephthalate, 1,4-butylene glycol dimethacrylate, trimethylolpropane trimethacrylate (TMPTM), diallyl esters of 1,1,3-trimethyl-5-carboxy-3-(p-carboxyphenyl)indane, diallyl adipate, diallyl phthalate (DAP), pentaerythritol trimethacrylate, glycerol propoxy trimethacrylate, liquid poly(1,2-butadiene), tri-(2-acryloxyethyl)isocyanurate, tri-(2-methacryloxyethyl)isocyanurate, and combinations thereof.

The compositions according to the first embodiment of the present invention may contain further additives commonly used in polymer formulations, such as antioxidants; UV-stabilizers; acid acceptors or scavengers (e.g. zinc oxide); plasticizers, lubricants, processing aids; and pigments (e.g. titanium dioxide, carbon black carbon, iron oxide, aluminum-cobalt oxide,copper phthalocyanine, perylene, bismuth vanadate or the like). As exemplary antioxidants, alkylated phenols, organic phosphite or phosphates, alkylidene polyphenols, thio-bis-alkylated phenols and polymerized derivatives thereof; dilauryl thiodipropionate, dimyristyl thiodipropionate, distearyl thiodipropionate (DSTDP), and combinations thereof may be mentioned. Such additives are typically used in total contents of less than 20 wt.-%, preferably less than 10 wt.-%, based on the total weight of the cross-linkable composition.

The fluorinated copolymer composition may contain a filler as long as its characteristics are not significantly impaired. As the filler, an inorganic filler is preferably contained. While not being limited thereto, examples of inorganic fillers may include one or more fibrous fillers (such as glass fibers, carbon fibers, boron fibers, aramid fibers, liquid crystal polyester fibers or stainless steel microfibers), or a powdery filler (such as talc, mica, graphite, molybdenum disulfide, polytetrafluoroethylene, calcium carbonate, silica, silica alumina, alumina or titanium dioxide). The content of the inorganic filler may be suitably selected by the skilled artisan. Typically, the amount of filler is less than 30 wt.-% based on the total weight of the cross-linkable composition.

### Cross-Linked Products, Articles Comprising the Same and Methods of Manufacture

In this regard, a second embodiment according to the present invention relates to a cross-linked product obtained by subjecting the composition according to the first embodiment to ionizing radiation. As has been set out above, the cross-linked products exhibit excellent mechanical properties over a wide range of temperatures, especially when subjected to prolonged exposure to high temperatures.

In general, the radiation used for cross-linking should exhibit a sufficiently high energy to penetrate the thickness of the fluoropolymer being treated and to produce ionization therein. The energy level used is any energy level which penetrates the thickness of the sample being irradiated under the atmospheric conditions employed, typically at least 0.5 MeV, and preferably from 1 to 10 MeV. Suitable radiation sources include, but are not limited to gamma rays, X-rays, alpha particles, electron beams, photon beams, deuteron beams, and the like, of which electron beam irradiation is usually preferred. Irradiation may be carried out at room temperature or at elevated temperatures.

The irradiation process is desirably performed so that the composition is exposed to radiation for a sufficient time and at sufficient dose to cause an improvement in tensile properties without degradation effects. In this regard, it is preferred that the composition is subjected to ionizing radiation at a dose level of from 50 to 200 kGy, preferably at a dose level of more 80 to 150 kGy, further preferably at a dose level of more than 80 kGy and 120 kGy or less.

The thus obtained cross-linked products are useful in many applications, such as tubes, wire or cable jackets and insulation, which will be exposed to environments involving extreme temperatures, harsh chemicals and/or high pressure situations. Accordingly, the material of the second embodiment is suitably used to form a covering on a wire for which high heat resistance is required, including electric wire, a (high voltage) cable, a communication line or an electric heater wire. Since it is particularly excellent in the stress crack resistance at high temperature, it is suitably used for electric wires in aircraft or automotive applications. A preferred application is in hybrid electric vehicles, wherein the implementation of an internal combustion engine and the electric propulsion system (and thus two heat sources) in a confined space may give rise to extensive local heat generation, so that operating temperatures may rise well above 260°C.

In a third embodiment, the present invention therefore relates to a wire or cable product comprising the cross-linked product according to the second embodiment. The term "wire or cable product", as used herein, includes a single electrically insulated elongate conductor (i.e. conductive core), an article comprising a plurality of separate elongate conductors each of which is separately insulated, and an article comprising a plurality of elongate conductors which are physically joined together but electrically insulated from each other by insulating material (e.g. ribbon cable). The configuration of the electrical insulation is not particularly limited and may be formed of multiple layers or a single insulation layer as long as at least one insulating layer comprises the cross-linked product according to the second embodiment. In addition, the conductive core may be suitably selected from materials known in the art (e.g., copper wire and the like)

In a fourth embodiment, the present invention relates to a of manufacturing a cross-linked product, comprising the steps of: (i) mixing (a) a perfluoroalkoxy alkane (PFA); (b) one or more selected from: (b1) a composition comprising melt-processable polytetrafluoroethylene (PTFE), (b2) a polyphenylene sulfide (PPS), (b3) an elastomeric fluoropolymer, and (b4) a polyetherimide (PEI); and optionally (c) one or more radiation crosslinking promoters to prepare a crosslinkable composition; (ii) optionally subjecting the crosslinkable composition to a forming step; and (iii) subjecting the crosslinkable composition to ionizing radiation to obtain the cross-linked product.

Preferred embodiments of the mixture of components (a), (b) and optionally (c) are explained in the context of the first embodiment above. The methods of preparing the blend of the components (a), (b) and (c) in step (i) are not particularly limited and may be suitably chosen by the skilled artisan depending on the compatibility of the polymers. For example, these may include dry-blending, extrusion mixing and/or melt processing, while melt extrusion processes are preferred.

In the optional step (ii), the cross-linkable composition is subjected to a shaping process. Suitable methods include moulding methods (incl. injection moulding, transfer molding, rotational moulding, thermoforming and compression moulding, for example), extrusion moulding, casting, machining, and the like.

Step (iii) comprises subjecting the crosslinkable composition to ionizing radiation to obtain the cross-linked product, as described above in conjunction with the second embodiment.

It will be understood that the preferred features of the first to fourth embodiments may be freely combined in any combination, except for combinations where at least some of the features are mutually exclusive.

Overall, it is envisaged that the cross-linkable compositions of the present invention enable manufacturing of toughened articles, which maintain favorable mechanical properties when exposed to extreme temperatures.

Once given the above disclosure, many other features, modifications, and improvements will become apparent to the skilled artisan.

## Claims

1. A cross-linkable composition comprising a blend of
(a) a perfluoroalkoxy alkane (PFA);
(b) one or more selected from:
(b1) a composition comprising melt-processable polytetrafluoroethylene (PTFE),
(b2) a polyphenylene sulfide (PPS),
(b3) an elastomeric fluoropolymer, and
(b4) a polyetherimide (PEI); and
(c) one or more optional radiation crosslinking promoters.

2. The cross-linkable composition according to claim 1, wherein the composition is cross-linkable by ionizing radiation.

3. The cross-linkable composition according to any of claims 1 or 2, wherein a weight content ratio of perfluoroalkoxy alkane (PFA) (a) to the total of the one or more polymers (b) is between 1:1 and 9:1.

4. The cross-linkable composition according to any of claims 1 to 3, wherein the content of perfluoroalkoxy alkane (PFA) (a) is at least 50 wt.-%, preferably between 60 and 95 wt.-%, and further preferably between 65 and 80 wt.-%, based on the total weight of the cross-linkable composition.

5. The cross-linkable composition according to any of claims 1 to 4, wherein the total content of the one or more polymers (b) is less than 50 wt.-%, preferably between 5 and 40 wt.-%, and further preferably between 20 and 35 wt.-%, based on the total weight of the cross-linkable composition.

6. The cross-linkable composition according to any of claims 1 to 5, wherein the one or more polymers (b) comprise at least two of the polymers selected from: (b1) a modified polytetrafluoroethylene (PTFE), (b2) a polyphenylene sulfide (PPS), (b3) an elastomeric fluoropolymer, and (b4) a polyetherimide (PEI).

7. The cross-linkable composition according to any of claims 1 to 6, wherein (b1) is a composition comprising melt-fabricable tetrafluoroethylene/perfluoro(alkyl vinyl ether) copolymer and melt-flowable polytetrafluoroethylene (PTFE).

8. The cross-linkable composition according to any of claims 1 to 7, wherein the elastomeric fluoropolymer (b3) is partially fluorinated.

9. The cross-linkable composition according to any of claims 1 to 8, wherein the elastomeric fluoropolymer (b3) is a co-polymer of a fluoroalkylene and an alkylene, preferably a co-polymer of tetrafluoroethylene and propylene.

10. The cross-linkable composition according to any of claims 1 to 6, wherein the polyetherimide (PEI) (b4) is a polysiloxane/polyetherimide block-copolymer..

11. The cross-linkable composition according to any of claims 1 to 10, wherein the one or more radiation crosslinking promoters (c) are comprised in a total amount of up to 10 wt.-% based on the total weight of the cross-linkable composition.

12. Cross-linked product obtained by subjecting the composition according to claims 1 to 11 to ionizing radiation.

13. Cross-linked product according to claim 12, wherein the composition has been subjected to ionizing radiation at a dose level of from 50 to 200 kGy, preferably at a dose level of more 80 to 150 kGy, further preferably at a dose level of more than 80 kGy and 120 kGy or less.

14. Wire or cable product comprising the cross-linked product according to any of claims 12 and 13.

15. Process of manufacturing a cross-linked product, comprising the steps of:
(i) mixing (a) a perfluoroalkoxy alkane (PFA); (b) one or more selected from: (b1) a composition comprising melt-processable polytetrafluoroethylene (PTFE), (b2) a polyphenylene sulfide (PPS), (b3) an elastomeric fluoropolymer, and (b4) a polyetherimide (PEI); and optionally (c) one or more radiation crosslinking promoters to prepare a crosslinkable composition;
(ii) optionally subjecting the crosslinkable composition to a forming step; and
(iii) subjecting the crosslinkable composition to ionizing radiation to obtain the cross-linked product.
